# FASCICULE DE BREVET EUROPEEN

(11) **EP 2 509 851 B1**
(45) Date de publication et mention de la délivrance du brevet: **28.08.2013**
(21) Numéro de dépôt: 10792975.4
(22) Date de dépôt: 05.11.2010
(51) Int. Cl.: B62D 35/00

(54) **DISPOSITIF AÉRODYNAMIQUE FLEXIBLE**
FLEXIBLE AERODYNAMISCHE VORRICHTUNG
FLEXIBLE AERODYNAMIC DEVICE

(30) Priorité: 10.12.2009 FR 0958838
(43) Date de publication de la demande: 17.10.2012
(73) Titulaire: Renault S.A.S., 92100 Boulogne-Billancourt (FR)
(72) Inventeur: PEROT, Patrick, F-78960 Voisins Le Bretonneux (FR); PERREUX, Philippe, F-78620 L'Etang La Ville (FR)
(86) Numéro de dépôt international: PCT/FR2010/052386
(87) Numéro de publication internationale: WO 2011/070259

(56) Documents cités:
- DE-A1- 2 549 493
- JP-A- 2004 330 994
- JP-A- 2005 132 206
- JP-A- 2008 307 938

## Description

La présente invention se rapporte aux dispositifs aérodynamiques flexibles destinés aux véhicules automobiles permettant de diminuer la portance des véhicules en mouvement.

Les véhicules automobiles en mouvement tendent à perdre leur adhérence au sol et en particulier sur les routes dès lors que leur vitesse augmente. En effet, à mesure que la vitesse augmente l'air tend notamment à s'engouffrer sous le véhicule et à lui imprimer un effort vertical ascendant qui diminue l'adhérence des roues du véhicule sur le sol. Un tel phénomène peut conduire à une perte de contrôle du véhicule et a une sortie de route. Afin de réduire cette portance, il a été imaginé de diminuer la garde au sol du véhicule, c'est-à-dire de réduire au maximum la distance qui sépare le châssis du véhicule et le sol. Toutefois, une telle réduction n'est possible que si le sol est parfaitement lisse et s'il ne présente pas de variations brutales d'inclinaison. Or, le véhicule automobile est souvent amené à franchir des obstacles, par exemple des trottoirs ou des anfractuosités du sol, de sorte que la garde au sol ne peut être réduite en deçà d'un certain seuil.

Il a alors été imaginé d'ajuster une jupe flexible en dessous du bouclier avant des véhicules automobiles de manière à, d'une part réduire la quantité d'air apte à s'engouffrer sous le véhicule et, d'autre part permettre au véhicule de rouler sur un sol non régulier. En effet, grâce à sa flexibilité, dès que la jupe rencontre un obstacle, elle se déforme pour s'effacer devant lui et elle reprend ensuite sa position normale dès que l'obstacle est franchi. On pourra se référer au document japonais JP2008307938, lequel divulgue la mise en oeuvre d'une telle jupe flexible sous le bouclier avant d'un véhicule automobile.

Toutefois, la jupe flexible pivote aisément lorsqu'une contrainte sensiblement perpendiculaire lui est appliquée, et c'est bien le cas lorsque un obstacle est rencontré sur le sol, tandis que le véhicule y est en mouvement selon une trajectoire sensiblement rectiligne et parallèle au sol. En revanche, lorsque la jupe subit une contrainte sensiblement perpendiculaire au châssis du véhicule, cela peut être le cas lorsque le véhicule franchit un trottoir à faible vitesse, cette contrainte peut être répercutée dans le bouclier et y occasionner des dégâts. Tout naturellement, pour répondre à cette problématique, les constructeurs de véhicules automobiles ont renforcé à la fois le bouclier et la liaison avec la jupe. Cependant, les coûts d'un tel renforcement sont importants.

Aussi, un problème qui se pose et que vise à résoudre la présente invention, est de fournir un dispositif aérodynamique incluant une jupe qui permette non seulement de franchir certains obstacles sans occasionner de dégâts au niveau du bouclier avant du véhicule, mais aussi qui puisse être produit à un coût avantageux.

Dans le but de résoudre ce problème, la présente invention propose un dispositif aérodynamique flexible destiné à être installé à l'avant d'un véhicule automobile. Ledit véhicule automobile comprend un élément de châssis et un bouclier monté à l'avant dudit véhicule automobile sensiblement perpendiculairement audit élément de châssis, ledit bouclier présentant un bord libre inférieur recourbé vers ledit élément de châssis. Ledit bord libre inférieur s'étend à distance dudit élément de châssis et ledit dispositif aérodynamique comprend une jupe définissant une surface cylindrique, ladite jupe présentant une partie supérieure profilée apte à être appliquée contre ledit bord libre inférieur dudit bouclier, tandis que ladite jupe s'étend dans le prolongement dudit bouclier. Ladite jupe est apte à être entraînée en pivotement vers ledit élément de châssis lorsqu'elle subit une contrainte sensiblement perpendiculaire à ladite jupe. Selon l'invention le dispositif aérodynamique comprend en outre une plaque de maintien flexible solidaire de ladite partie supérieure profilée de ladite jupe et qui s'étend sensiblement perpendiculairement à ladite jupe, ladite plaque de maintien flexible étant apte à être reliée audit élément de châssis dans une zone de liaison de manière à maintenir ladite jupe dans le prolongement dudit bouclier. Et, ladite plaque de maintien flexible est apte à fléchir autour de ladite zone de liaison pour autoriser le mouvement de ladite jupe selon une direction sensiblement parallèle aux génératrices de ladite surface cylindrique de ladite jupe, de manière à permettre la rétraction de ladite jupe derrière ledit bouclier lorsque ladite jupe subit une contrainte sensiblement parallèle auxdites génératrices.

Ainsi, une caractéristique de l'invention réside dans la mise en oeuvre d'une jupe solidaire de l'élément de châssis grâce à la plaque de maintien et qui soit indépendante du bouclier. De la sorte, lorsque la jupe subit une contrainte verticale, ou perpendiculaire audit élément de châssis du véhicule automobile, et dans un sens orienté vers le bouclier, ce dernier ne subit aucun effort car la jupe se rétracte précisément derrière le bouclier, selon une direction sensiblement parallèle aux génératrices de la surface cylindrique de la jupe, tandis que la plaque de maintien flexible fléchit. Ainsi qu'on l'expliquera plus en détail dans la suite de la description, la jupe s'étend le long du bouclier qui lui même s'étend sur toute la largeur de la partie avant du véhicule. Aussi, la jupe est-elle susceptible de se rétracter précisément dans une partie déterminée de la largeur tandis que les autres parties demeurent intactes. Partant, la plaque de maintien fléchit essentiellement dans une zone correspondant à ladite partie déterminée de jupe. Au surplus, la plaque de maintien est déformable élastiquement de telle sorte que, lorsque les contraintes verticales qui s'exercent sur la jupe cessent, la plaque de maintien tend à retrouver sa forme initiale et la jupe reprendre sa position dans le prolongement du bouclier.

Selon un mode de mise en oeuvre de l'invention particulièrement avantageux, et qui permet le pivotement de la jupe, le dispositif aérodynamique comprend en outre des organes d'appui solidaires de ladite partie supérieure profilée de jupe et qui s'étendent à l'opposé de ladite jupe, et lesdits organes d'appui prennent appui contre ledit bouclier lorsque ladite jupe et lesdits organes d'appui sont entraînés ensemble en pivotement vers ledit élément de châssis, tandis que ladite plaque de maintien flexible fléchie entre ladite partie supérieure profilée de jupe et ladite zone de liaison. De la sorte, la jupe ne pivote non plus autour de la partie supérieure profilée mais au niveau des organes d'appui ce qui permet d'obtenir un plus grand rayon de courbure de pivotement de la jupe. Au surplus, c'est la plaque de maintien qui fléchit entre la partie supérieure profilée et la zone de liaison lorsque la jupe pivote. Par conséquent, la partie supérieure profilée autour de laquelle la jupe pivote, dans les dispositifs de l'art antérieur, n'est plus autant sollicitée mécaniquement pour l'objet de la présente invention. C'est en effet cette partie supérieure profilée qui vient en appui contre le bord libre inférieur du bouclier pour assurer l'étanchéité à l'air et il convient de la préserver.

En outre, de manière préférée, lesdits organes d'appui s'étendent sensiblement parallèlement auxdites génératrices de la surface cylindrique de la jupe. Les organes d'appui et la jupe forment alors un ensemble rigide, de sorte que, lorsque la jupe subit une contrainte perpendiculaire, elle pivote avec les organes d'appui qui la prolonge, et lorsque la jupe subit une contrainte sensiblement parallèle aux génératrices, la jupe et les organes d'appui sont entraînés en translation selon une direction sensiblement confondue avec les génératrices.

Avantageusement, lesdits organes d'appui comprennent des pattes terminées respectivement par un crochet libre. Et elles sont espacées de proche en proche sur toute la longueur du dispositif aérodynamique. En outre, le crochet libre est destiné à venir prendre appui sur une portée d'appui ménagée dans le bouclier de manière à bloquer la jupe en translation selon une direction parallèle aux génératrices, mais orientée vers le sol. Ainsi, la jupe peut pivoter vers l'élément de châssis avec l'organe d'appui autour de la portée d'appui où est en prise le crochet libre.

Par ailleurs, ladite plaque de maintien flexible comprend une bordure de fixation opposée à ladite partie supérieure profilée de jupe et destinée à être reliée audit élément de châssis dans ladite zone de liaison. Ainsi, lorsque la jupe est entraînée en translation selon ses génératrices pour être escamotée derrière le bouclier, la plaque de maintien flexible, dans la bordure de fixation est en prise au niveau de la zone de liaison fléchie en battement autour de cette zone de liaison. En revanche, lorsque la jupe pivote avec l'organe d'appui, la plaque de maintien subit des contraintes où la partie supérieure profilée est entraînée vers la zone de liaison, ce qui provoque un fléchissement de la plaque de maintien qui s'incurve alors en se rapprochant dudit élément de châssis. Bien évidemment, la plaque de maintien étant déformable élastiquement, lorsque les efforts exercés sur la jupe pour la faire pivoter cessent, alors la plaque de maintien retrouve sa forme initiale et la jupe sa position dans le prolongement du bouclier où la partie supérieure profilée est appliquée contre le bord libre inférieur du bouclier.

Selon un mode préféré de mise en oeuvre de l'invention, ladite bordure de fixation est surélevée par rapport à ladite plaque de maintien flexible dans un sens opposé à ladite jupe, de manière à écarter la plaque de maintien flexible de l'élément de châssis pour lui autoriser une amplitude de mouvement en battement suffisante. Avantageusement, le dispositif aérodynamique comprend une lèvre qui s'étend en saillie de ladite partie supérieure profilée de ladite jupe dans un sens opposé à ladite plaque de maintien, et qui est destinée à venir s'appliquer contre le bord libre inférieur du bouclier de manière étanche. De la sorte, l'air s'écoule le long du bouclier puis de la jupe sans pénétrer sous l'élément de châssis entre le bouclier et la jupe. Le dispositif aérodynamique est ainsi plus efficace. Par ailleurs, ladite lèvre est recourbée dans un sens opposé à ladite jupe. De la sorte, elle vient s'appliquer parfaitement contre l'intérieur du bord libre inférieur du bouclier qui lui même est avantageusement recourbé.

En outre, le dispositif aérodynamique s'étend en arc et présente deux parties symétriques l'une de l'autre par rapport à un plan médian de manière à venir s'appliquer sur toute la largeur du bouclier avant du véhicule automobile. Ainsi, le dispositif s'étend en arc d'une roue avant à l'autre roue avant, et permet de limiter l'entrée d'air sous le véhicule entre ces deux roues.

De plus, ladite jupe, ladite partie supérieure profilée, ladite plaque de maintien flexible, lesdits organes d'appui et ladite lèvre sont avantageusement moulés ensemble d'une seule pièce. Cela permet d'obtenir un dispositif aérodynamique à un coût très avantageux.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en perspective d'un dispositif aérodynamique conforme à l'invention ;
- la Figure 2 est une vue schématique en coupe droite du dispositif aérodynamique représenté sur la Figure 1 selon le plan II-II et associé à d'autres éléments d'un véhicule automobile ;
- la Figure 3 est une vue schématique en coupe droite du dispositif aérodynamique représenté sur la Figure 1 selon le plan III-III associé aux autres éléments du véhicule automobile; et,
- la Figure 4 est une vue schématique en coupe droite d'un dispositif aérodynamique conforme à l'invention selon un autre mode de mise en oeuvre.

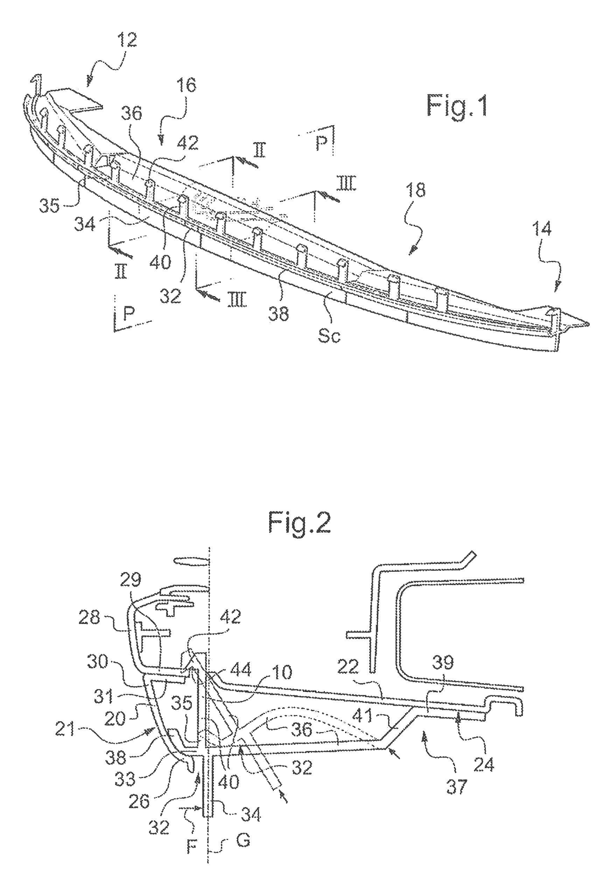

La Figure 1 montre en perspective un dispositif aérodynamique 10 conforme à l'invention destiné à être installé à l'avant d'un véhicule automobile sous le bouclier du véhicule. Le bouclier désigne usuellement un large pare-chocs qui est destiné à protéger la carrosserie du véhicule des chocs survenant à faible allure. Le bouclier est profilé et il s'étend sur toute la largeur de la carrosserie, à l'avant du véhicule de manière à favoriser le meilleur écoulement possible de l'air lorsque le véhicule est en mouvement.

Le dispositif aérodynamique 10 est adapté à être relié au bouclier ainsi qu'on l'expliquera ci-après, et il s'étend en arc entre deux extrémités opposées 12, 14. Par ailleurs, il présente deux parties opposées 16, 18 symétriques l'une de l'autre par rapport à un plan médian P.

On se reportera à la Figure 2, sur laquelle le dispositif aérodynamique 10 vu en coupe droite est agencé avec des éléments d'un véhicule automobile. Ces éléments comprennent un bouclier 20 présentant une surface avant libre 21 et un élément de châssis 22 présentant une paroi de dessous 24. Le bouclier 20 s'étend sensiblement perpendiculairement à l'élément de châssis 22. Aussi, en situation de roulement du véhicule, l'air s'écoule à la surface avant libre 21 du bouclier 20.

Le bouclier 20 présente un bord libre inférieur 26 recourbé vers l'élément de châssis 22. En outre, il est, selon le mode de mise en oeuvre illustré sur la Figure 2, constitué de deux éléments profilés superposés, l'un supérieur 28, l'autre inférieur 30. Ces deux éléments profilés 28, 30 présentent respectivement un rebord inférieur 29 et un rebord supérieur 31 recourbés à plat et en appui l'un sur l'autre. Ces rebords 29, 31 s'étendent sensiblement au droit du bord libre inférieur 26 recourbé vers l'élément de châssis.

S'agissant du dispositif aérodynamique 10 en coupe droite, il est représenté ici en traits continus dans sa position de repos, et en traits interrompus dans une position active. Il comprend une partie supérieure profilée en T inversé 32 et une jupe 34. La partie supérieure profilée en T inversé 32, présente d'une part un retour 33 par rapport à la jupe 34, orienté vers le bord libre inférieur 26 et correspondant à la barre du T, et d'autre part une nervure 35 orientée à l'opposé de la jupe 34, sensiblement décalée vers le bord libre inférieur 26 et correspondant à la jambe du T. La jupe 34 définit une surface cylindrique Sc qui apparaît clairement sur la Figure 1, et qui est définie par des génératrices G. Sur la Figure 2, le dispositif aérodynamique 10 comporte en outre une plaque de maintien 36 flexible qui s'étend sensiblement perpendiculairement à la jupe 34 et à l'opposé du retour 33. Et à l'opposé de la plaque de maintien 36, il comprend en outre une lèvre 38 qui s'étend en saillie à partir de la partie supérieure profilée 32 dans le prolongement du retour 33 et est recourbée dans un sens opposé à la jupe 34. Dans cette position de repos, la lèvre 38 vient prendre appui contre la surface interne du bord libre inférieur 26 recourbé du bouclier 20. À l'opposé, la plaque de maintien 36 comporte une bordure de fixation 39 surélevée par rapport au plan moyen de la plaque de maintien 36. La plaque de maintien 36 est reliée à la bordure de fixation 39 par l'intermédiaire d'une bordure de liaison 41. Cette bordure de liaison forme un angle voisin de 120° à la fois avec la plaque de maintien 36 et avec la bordure de fixation 39. La bordure de fixation 39 est installée en position fixe contre la paroi de dessous 24 de l'élément de châssis 22 dans une zone de liaison 37.

En outre, le dispositif aérodynamique 10 présente un organe d'appui 40 constitué d'une patte terminée par un crochet 42, et qui s'étend à partir de la partie supérieure profilée 32 parallèlement aux génératrices G et dans un sens opposé à la jupe 34. La patte de l'organe d'appui 40 s'étend par exemple sur une longueur supérieure à la longueur de la jupe 34 selon la direction de ses génératrices, par exemple une fois et demie supérieure comme illustré sur la Figure 2. En outre, la patte de l'organe d'appui qui s'étend sensiblement dans le prolongement de la jupe 34 constitue avec elle un ensemble relativement rigide selon la direction des génératrices G et peu sujet au flambage. On observera sur la Figure 1 que les pattes des organes d'appui 40 sont espacées sensiblement régulièrement les unes des autres- sur le dispositif aérodynamique 10 d'une extrémité opposée 12 à l'autre extrémité opposée 14. Le crochet 42 présente un épaulement 44 orienté vers la partie supérieure profilée 32 et apte à prendre appui contre le rebord inférieur 29 de l'élément profilé supérieur 28.

Ainsi, en position de repos du dispositif aérodynamique 10, la jupe 34 est maintenue dans le prolongement du bouclier 20 de manière relativement étanche grâce à la lèvre 28 qui épouse la forme de la surface interne du bord libre inférieur 26. Aussi, la jupe 34 constitue un muret aérodynamique qui est destiné à venir s'étendre au voisinage de la surface du sol lorsque le véhicule est en appui sur le sol et sur ses quatre roues. Grâce à ce muret aérodynamique le coefficient de pénétration dans l'air du véhicule en mouvement, en correspondance avec le Scx, est amélioré et par conséquent, la consommation en carburant du véhicule diminue. Partant, le rejet en CO₂ du véhicule est moindre à vitesse égale.

Par ailleurs, le dispositif aérodynamique 10 est réalisé d'une seule pièce en matière plastique, par exemple au moyen d'une presse à injection. Le matériau polymère choisi est déformable élastiquement.

Grâce à cette caractéristique, la jupe 34 est apte à pivoter lorsqu'elle subit une contrainte perpendiculaire orientée de l'avant vers l'arrière du véhicule. C'est notamment le cas lorsqu'en situation de roulement, une aspérité est présente sur le sol. La jupe 34 subit ainsi une contrainte locale sensiblement perpendiculaire à elle-même selon la flèche F. Aussi, lorsqu'une telle contrainte apparaît, la jupe 34 tend à pivoter avec la patte de l'organe d'appui 40 qui la prolonge en se rapprochant de l'élément de châssis 22. Le crochet 42 prend en effet appui contre le rebord inférieur 29 et la patte de l'organe d'appui 40 pivote avec la jupe 34 qu'elle prolonge de manière rigide, et ce, autour du crochet 42. Ce faisant, la partie supérieure profilée 32 est entraînée en mouvement vers la zone de liaison 37 de sorte que, la plaque de maintien 36 est fléchie vers l'élément de châssis 22 entre la bordure de fixation 39 qui est maintenue en position fixe et précisément la partie supérieure profilée 32. La plaque de maintien 36 fléchit de manière élastique, de telle sorte que lorsque l'obstacle ou l'aspérité est franchie, la jupe 34 retrouve sa position originelle.

On observera tout d'abord, que l'impact sur la jupe 34 peut intervenir sur une zone plus ou moins large et par exemple à un niveau situé entre deux pattes d'organes d'appui 40 consécutives, telles qu'illustrées sur la Figure 1. Aussi, la jupe 34 pivote alors, de la manière telle qu'indiquée ci-dessus, alors que les crochets 42 des deux pattes consécutives 40 sont sollicités. Ensuite, lorsque la plaque de maintien 36 fléchit, ce fléchissement intervient sur une certaine largeur de plaque de maintien 36, située en regard de l'impact sur la jupe 34. D'ailleurs, la largeur du fléchissement, où la plaque de maintien 36 est incurvée, est sensiblement supérieure à la largeur de la zone d'impact sur la jupe 34.

On notera également que le rayon de courbure correspondant au mouvement de l'extrémité libre de la jupe 34 lors de son pivotement est supérieur à celui qu'aurait l'extrémité libre d'une jupe qui pivoterait au niveau de la partie supérieure profilée 32, comme cela est le cas pour les dispositifs aérodynamiques selon l'art antérieur.

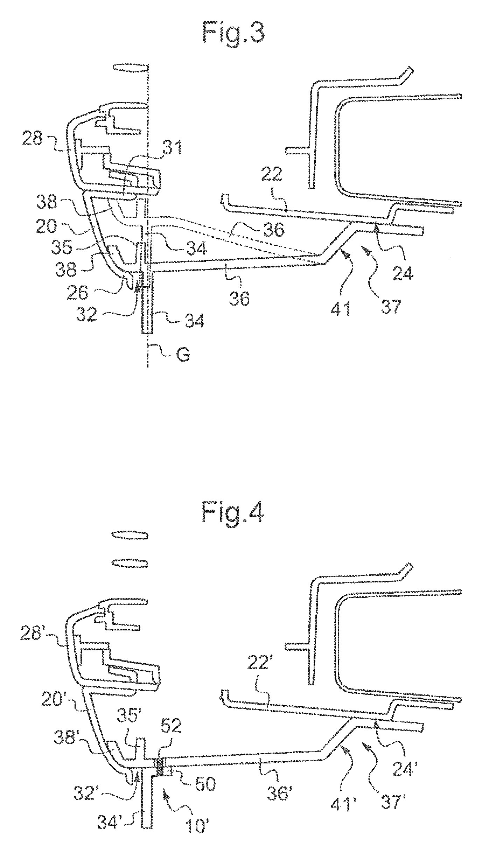

On se référera à présent à la Figure 3 montrant le dispositif aérodynamique en coupe droite, non plus au niveau de la patte d'un organe d'appui 40, mais précisément entre deux pattes d'organes d'appui 40 telles que représentées sur la Figure 1 et au surplus. En outre, cette Figure illustre un mode de fonctionnement différent du dispositif aérodynamique flexible selon l'invention par rapport à celui qui est exposé au regard de la Figure 2.

Ainsi, on retrouve sur cette Figure tous les éléments déjà décrits au regard de la Figure 2 excepté la patte de l'organe d'appui 40. La position de repos du dispositif aérodynamique 10 est analogue à celle du dispositif le représentées sur la Figure 2. En revanche, il est représenté en trais interrompus dans une position différente où la jupe 34 a été entraînée en translation selon une direction verticale ascendante, correspondant à la direction des génératrices G.

En effet, lorsque le véhicule automobile est par exemple en stationnement sur un trottoir et qu'il roule pour quitter cette position de stationnement, lors du franchissement de la marche du trottoir, la jupe 34 est susceptible de subir une contrainte verticale ascendante, où le bord inférieur de la jupe 34 retombe en appui sur le bord du trottoir. En ce cas, la jupe est bien entraînée en translation derrière le bouclier 20 tandis que la plaque de maintien 36 fléchie vers l'élément de châssis 22 et que la lèvre 38 quitte la surface interne du bord libre inférieur 26 sur lequel elle s'appuie pour être entraînée vers le rebord supérieur 31 de l'élément profilé inférieur 30. Ainsi, la plaque de maintien 36 tend à pivoter autour de la zone de liaison 37 et être entraîné vers l'élément de châssis 22. La largeur de la plaque de maintien 36, entre la partie supérieure profilée 32 et la bordure de liaison 41 est supérieure à la longueur de la jupe 34, par exemple deux fois supérieure, de telle sorte que le pivotement de la plaque de maintien 36, conduit à une course moyenne de la jupe 34 sensiblement rectiligne. D'ailleurs, la plaque de maintien 36 tend à pivoter autour de la bordure de liaison 41.

Ainsi donc, la jupe 34 s'escamote derrière le bouclier 20 durant le franchissement de l'obstacle ou de la marche du trottoir, et ensuite dès que le véhicule retrouve une surface relativement plane, la jupe 34 retrouve sa position correspondant la position de repos du dispositif aérodynamique, puisque la plaque de maintien 36 s'est déformée au préalable élastiquement. Ainsi, lorsque le véhicule retrouve une situation de roulement usuel, la jupe 34 joue son rôle de muret aérodynamique.

On observera que la jupe 34 s'escamote verticalement sans occasionner de dommages au bouclier 20 contrairement au dispositif aérodynamique selon l'art antérieur.

Selon un autre mode de mise en oeuvre de l'invention représenté sur la Figure 4, sur laquelle on retrouve les éléments identiques à ceux du mode de mise en oeuvre précédent avec la même référence affectée d'un signe prime : « ' » le dispositif aérodynamique 10' comporte deux parties distinctes ; une jupe 34' réalisée dans un matériau plus flexible qu'une plaque de maintien 36'. La jupe 34' est profilée en L et elle présente ainsi un retour de fixation 50 appliqué contre la plaque de maintien 36' sur laquelle elle est rivetée au moyen d'un rivet « pop » 52.

A la différence du mode de mise en oeuvre précédent, le dispositif aérodynamique 10' ne comporte pas d'organe d'appui du type précité. En revanche, la jupe 34' est réalisée par exemple en matériau plastique de type polyuréthane, et par conséquent dès lors qu'elle est heurtée par un obstacle selon une direction perpendiculaire, elle se déforme et tend à se plier vers la plaque de maintien 36'.

En outre, tout comme dans le précédent mode de mise en oeuvre, la jupe 34' s'escamote verticalement durant le franchissement de la marche du trottoir et ensuite retrouve sa position correspondant la position de repos grâce à la plaque de maintien 36' qui s'est déformée au préalable élastiquement.

## Revendications

1. Dispositif aérodynamique (10) flexible destiné à être installé à l'avant d'un véhicule automobile, ledit véhicule automobile comprenant un élément de châssis (22) et un bouclier (20) monté à l'avant dudit véhicule automobile sensiblement perpendiculairement audit élément de châssis, ledit bouclier présentant un bord libre inférieur (26) recourbé vers ledit élément de châssis, ledit bord libre inférieur s'étendant à distance dudit élément de châssis, ledit dispositif aérodynamique (10) comprenant une jupe (34) définissant une surface cylindrique, ladite jupe présentant une partie supérieure profilée (32) apte à être appliquée contre ledit bord libre inférieur (26) dudit bouclier (20), tandis que ladite jupe (34) s'étend dans le prolongement dudit bouclier, ladite jupe (34) étant apte à être entraînée en pivotement vers ledit élément de châssis (22) lorsqu'elle subit une contrainte sensiblement perpendiculaire à ladite jupe (34);
**caractérisé en ce qu'**il comprend en outre une plaque de maintien (36) flexible solidaire de ladite partie supérieure profilée (32) de ladite jupe (34) et qui s'étend sensiblement perpendiculairement à ladite jupe, ladite plaque de maintien (36) flexible étant apte à être reliée audit élément de châssis (22) dans une zone de liaison (37) de manière à maintenir ladite jupe (34) dans le prolongement dudit bouclier (20);
et **en ce que** ladite plaque de maintien (36) flexible est apte à fléchir autour de ladite zone de liaison (37) pour autoriser le mouvement de ladite jupe (34) selon une direction sensiblement parallèle aux génératrices G de ladite surface cylindrique de ladite jupe (34), de manière à permettre la rétraction de ladite jupe (34) derrière ledit bouclier (20) lorsque ladite jupe (34) subit une contrainte sensiblement parallèle auxdites génératrices G.

2. Dispositif aérodynamique selon la revendication 1, **caractérisé en ce qu'**il comprend en outre des organes d'appui (40) solidaires de ladite partie supérieure profilée (32) de jupe et qui s'étendent à l'opposé de ladite jupe (34), et **en ce que** lesdits organes d'appui (40) prennent appui contre ledit bouclier (20) lorsque ladite jupe (34) et lesdits organes d'appui (40) sont entraînés ensemble en pivotement vers ledit élément de châssis (22), tandis que ladite plaque de maintien (36) flexible fléchie entre ladite partie supérieure profilée de jupe et ladite zone de liaison (37).

3. Dispositif aérodynamique selon la revendication 2, **caractérisé en ce que** lesdits organes d'appui (40) s'étendent sensiblement parallèlement auxdites génératrices G.

4. Dispositif aérodynamique selon la revendication 2 ou 3, **caractérisé en ce que** lesdits organes d'appui (40) comprennent des pattes terminées respectivement par un crochet libre (42).

5. Dispositif aérodynamique selon l'une quelconque des revendications 1 à 4, **caractérisé en ce que** ladite plaque de maintien (36) flexible comprend une bordure de fixation (39) opposée à ladite partie supérieure profilée (32) de jupe et destinée à être reliée audit élément de châssis (22) dans ladite zone de liaison (37).

6. Dispositif aérodynamique selon la revendication 5, **caractérisé en ce que** ladite bordure de fixation (39) est surélevée par rapport à ladite plaque de maintien (36) flexible dans un sens opposé à ladite jupe (34).

7. Dispositif aérodynamique selon l'une quelconque des revendications 1 à 6, **caractérisé en ce qu'**il comprend une lèvre (38) qui s'étend en saillie de ladite partie supérieure profilée (32) de ladite jupe (34) dans un sens opposé à ladite plaque de maintien (36).

8. Dispositif aérodynamique selon la revendication 7, **caractérisé en ce que** ladite lèvre (38) est recourbée dans un sens opposé à ladite jupe (34).

9. Dispositif aérodynamique selon l'une quelconque des revendications 1 à 8, **caractérisé en ce qu'**il s'étend en arc et présente deux parties (16, 18) symétriques l'une de l'autre par rapport à un plan médian P.

10. Dispositif aérodynamique selon l'une quelconque des revendications 1 à 9, **caractérisé en ce que** ladite jupe (34), ladite partie supérieure profilée (32), ladite plaque de maintien (36) flexible, lesdits organes d'appui (40) et ladite lèvre (38) sont moulés ensemble d'une seule pièce.

## Patentansprüche

1. Biegsame aerodynamische Vorrichtung (10), die dazu bestimmt ist, an der Vorderseite eines Kraftfahrzeugs eingebaut zu werden, wobei das Kraftfahrzeug ein Fahrgestellelement (22) und einen Stoßfänger (20) enthält, der an der Vorderseite des Kraftfahrzeugs im Wesentlichen lotrecht zum Fahrgestellelement montiert ist, wobei der Stoßfänger einen zum Fahrgestellelement umgebogenen freien unteren Rand (26) aufweist, wobei der freie untere Rand sich in Abstand zum Fahrgestellelement erstreckt, wobei die aerodynamische Vorrichtung (10) eine eine zylindrische Fläche definierende Schürze (34) enthält, wobei die Schürze einen oberen Profilteil (32) aufweist, der gegen den unteren freien Rand (26) des Stoßfängers (20) angelegt werden kann, während die Schürze (34) sich in der Verlängerung des Stoßfängers erstreckt, wobei die Schürze (34) zum Fahrgestellelement (22) geschwenkt werden kann, wenn sie eine Beanspruchung im Wesentlichen lotrecht zur Schürze (34) erfährt;
**dadurch gekennzeichnet, dass** sie außerdem eine biegsame Halteplatte (36) enthält, die fest mit dem oberen Profilteil (32) der Schürze (34) verbunden ist und sich im Wesentlichen lotrecht zur Schürze erstreckt, wobei die biegsame Halteplatte (36) mit dem Fahrgestellelement (22) in einem Verbindungsbereich (37) verbunden werden kann, um die Schürze (34) in der Verlängerung des Stoßfängers (20) zu halten;
und dass die biegsame Halteplatte (36) sich um die Verbindungszone (37) biegen kann, um die Bewegung der Schürze (34) gemäß einer Richtung im Wesentlichen parallel zu den Mantellinien G der zylindrischen Fläche der Schürze (34) zu erlauben,
um das Einziehen der Schürze (34) hinter den Stoßfänger (20) zu ermöglichen, wenn die Schürze (34) eine Beanspruchung im Wesentlichen parallel zu den Mantellinien G erfährt.

2. Aerodynamische Vorrichtung nach Anspruch 1, **dadurch gekennzeichnet, dass** sie außerdem Auflageorgane (40) enthält, die fest mit dem oberen Schürzenprofilteil (32) verbunden sind und sich entgegengesetzt zur Schürze (34) erstrecken, und dass die Auflageorgane (40) gegen den Stoßfänger (20) aufliegen, wenn die Schürze (34) und die Auflageorgane (40) zusammen zum Fahrgestellelement (22) geschwenkt werden, während die biegsame Halteplatte (36) sich zwischen dem oberen Schürzenprofilteil und der Verbindungszone (37) biegt.

3. Aerodynamische Vorrichtung nach Anspruch 2, **dadurch gekennzeichnet, dass** die Auflageorgane (40) sich im Wesentlichen parallel zu den Mantellinien G erstrecken.

4. Aerodynamische Vorrichtung nach Anspruch 2 oder 3, **dadurch gekennzeichnet, dass** die Auflageorgane (40) Laschen enthalten, die je in einem freien Haken (42) enden.

5. Aerodynamische Vorrichtung nach einem der Ansprüche 1 bis 4, **dadurch gekennzeichnet, dass** die biegsame Halteplatte (36) einen Befestigungsrand (39) entgegengesetzt zum oberen Schürzenprofilteil (32) enthält, der dazu bestimmt ist, in der Verbindungszone (37) mit dem Fahrgestellelement (22) verbunden zu werden.

6. Aerodynamische Vorrichtung nach Anspruch 5, **dadurch gekennzeichnet, dass** der Befestigungsrand (39) bezüglich der biegsamen Halteplatte (36) in einer zur Schürze (34) entgegengesetzten Richtung erhöht ist.

7. Aerodynamische Vorrichtung nach einem der Ansprüche 1 bis 6, **dadurch gekennzeichnet, dass** sie eine Lippe (38) enthält, die sich vom oberen Profilteil (32) der Schürze (34) in einer zur Halteplatte (36) entgegengesetzten Richtung vorstehend erstreckt.

8. Aerodynamische Vorrichtung nach Anspruch 7, **dadurch gekennzeichnet, dass** die Lippe (38) in einer zur Schürze (34) entgegengesetzten Richtung gekrümmt ist.

9. Aerodynamische Vorrichtung nach einem der Ansprüche 1 bis 8, **dadurch gekennzeichnet, dass** sie sich bogenförmig erstreckt und zwei zueinander bezüglich einer Mittelebene P symmetrische Teile (16, 18) aufweist.

10. Aerodynamische Vorrichtung nach einem der Ansprüche 1 bis 9, **dadurch gekennzeichnet, dass** die Schürze (34), der obere Profilteil (32), die biegsame Halteplatte (36), die Auflageorgane (40) und die Lippe (38) zusammen aus einem Stück geformt werden.

## Claims

1. Flexible aerodynamic device (10) for installation on the front of a motor vehicle, said motor vehicle comprising a chassis member (22) and a shield (20) mounted on the front of said motor vehicle substantially perpendicularly to said chassis member, said shield having a lower free edge (26) curved towards said chassis member, said lower free edge extending at a distance from said chassis member, said aerodynamic device (10) comprising a skirt (34) defining a cylindrical surface, said skirt having a profiled upper part (32) adapted to be pressed against said lower free edge (26) of said shield (20) while said skirt (34) extends in line with said shield, said skirt (34) being adapted to be driven so as to pivot toward said chassis member (22) when it is loaded substantially perpendicularly to said skirt (34);
**characterized in that** it further comprises a flexible retaining plate (36) fastened to said profiled upper part (32) of said skirt (34) and which extends substantially perpendicularly to said skirt, said flexible retaining plate (36) being adapted to be connected to said chassis member (22) in a connecting area (37) so as to hold said skirt (34) in line with said shield (20);
and **in that** said flexible retaining plate (36) is adapted to flex around said connecting area (37) so as to allow movement of said skirt (34) in a direction substantially parallel to the generatrices G of said cylindrical surface of said skirt (34) so as to allow retraction of said skirt (34) behind said shield (20) when said skirt (34) is loaded substantially parallel to said generatrices G.

2. Aerodynamic device according to Claim 1, **characterized in that** it further comprises supporting members (40) fastened to said profiled upper skirt part (32) and extending away from said skirt (34) and **in that** said supporting members (40) bear against said shield (20) when said skirt (34) and said supporting members (40) are driven together to pivot toward said chassis member (22), while said flexible retaining plate (36) flexes between said profiled upper skirt part and said connecting area (37).

3. Aerodynamic device according to Claim 2, **characterized in that** said supporting members (40) extend substantially parallel to said generatrices G.

4. Aerodynamic device according to Claim 2 or 3, **characterized in that** said supporting members (40) comprise lugs terminated by a respective free hook (42).

5. Aerodynamic device according to any one of Claims 1 to 4, **characterized in that** said flexible retaining plate (36) comprises a fixing edge (39) opposite said profiled upper skirt part (32) and adapted to be connected to said chassis member (22) in said connecting area (37).

6. Aerodynamic device according to Claim 5, **characterized in that** said fixing edge (39) is raised relative to said flexible retaining plate (36) in a direction away from said skirt (34).

7. Aerodynamic device according to any one of Claims 1 to 6, **characterized in that** it comprises a lip (38) which projects from said profiled upper part (32) of said skirt (34) in a direction away from said retaining plate (36).

8. Aerodynamic device according to Claim 7, **characterized in that** said lip (38) is curved in a direction away from said skirt (34).

9. Aerodynamic device according to any one of Claims 1 to 8, **characterized in that** it extends in an arc and has two portions (16, 18) symmetrical to each other with respect to a median plane P.

10. Aerodynamic device according to any one of Claims 1 to 9, **characterized in that** said skirt (34), said profiled upper portion (32), said flexible retaining plate (36), said supporting members (40) and said lip (38) are moulded together in one piece.
